# EUROPÄISCHE PATENTSCHRIFT

(11) **EP 0 549 938 B1**
(45) Veröffentlichungstag und Bekanntmachung des Hinweises auf die Patenterteilung: **14.11.2001**
(21) Anmeldenummer: 92121164.5
(22) Anmeldetag: 11.12.1992
(51) Int. Cl.: H04Q 11/04, H04M 11/06

(54) **Digitale Nachrichtenvermittlungseinheit und digitales Nachrichtenvermittlungssystem**
Digital message switching unit and digital message switching system
Unité de commutation de messages numérique et système de commutation de messages numérique

(30) Priorität: 16.12.1991 DE 4141493
(43) Veröffentlichungstag der Anmeldung: 07.07.1993
(73) Patentinhaber: Infineon Technologies AG, 81669 München (DE); SIEMENS AKTIENGESELLSCHAFT, 80333 München (DE)
(72) Erfinder: Engl, Anneliese, Ing., W-8000 München 71 (DE); Klug, Karl, Dipl.-Ing., W-8160 Miesbach (DE); Strafner, Michael, Dipl.-Ing., W-8011 Kirchheim (DE); Wolff, Christian, Dipl.-Ing., W-8160 Miesbach (DE)
(74) Vertreter: Zedlitz, Peter, Dipl.-Inf.

(56) Entgegenhaltungen:
- EP-A- 0 320 890
- EP-A- 0 447 935
- US-A- 4 296 281
- US-A- 4 626 628
- TELCOM REPORT. Bd. 13, Nr. 2, M{rz 1990, MUNCHEN DE Seiten 70 - 73 M.BROWN ET AL.

## Beschreibung

Die Erfindung betrifft eine digitale Nachrichtenvermittlungseinheit nach dem Oberbegriff des Patentanspruches 1 und ein digitales Nachrichtenvermittlungssystem nach dem Oberbegriff des Patentanspruches 2.

Nachrichtenvermittlungssysteme sind umso wirtschaftlicher, je mehr Endstellen sie zusammenfassen. Die zu übertragenden Signale werden daher stufenweise gebündelt und können so bei Bedarf in der jeweiligen Bündelungsebene (Hierarchiestufe) rangiert und verteilt werden. Moderne digitale Nachrichtenvermittlungssysteme sind daher üblicherweise hierarchisch organisierte, rechnergesteuerte Systeme, die von den einzelnen Endstellen übertragene Daten empfangen, auswerten, aufbereiten und/oder an eine andere Einheit weiterleiten.

Man unterscheidet dabei einerseits leitungsvermittelte Daten, die für eine bestimmte Zeit von einer Endstelle zur anderen übertragen werden. Diese Möglichkeit wird beispielweise für hochpriorisierte Sprachübertragung gewählt, ist aber für eine allgemeine Datenübertragung oft uneffektiv, da verfügbare Übertragungsstrecken nur teilweise ausgelastet werden. Man unterscheidet daher andererseits paketvermittelte Daten, die bei Bedarf von einer Bündelungsebene zwischengespeichert werden, um durch Auswahl eines geeigneten, möglichen Übertragungswegs zwischen den jeweilgen Endstellen eine hohe Auslastung der Übertragungsstrecken zu erzielen.

Die Möglichkeit, sowohl paketvermittelte als leitungsvermittelte Daten zu übertragen, bieten digitale, universelle Schmalbandnetze wie beispielsweise das Integrated Services Digital Network (ISDN). Bei ISDN erfolgt der Zugang zu verschiedenen Kommunikationsdiensten über sogenannte Protokolle, die in entsprechenden Empfehlungen des Comité Consultatif International Télégraphique et Téléphonique (CCITT) definiert sind. Diese Protokolle werden über Datenkanäle (D-Kanäle) ausgetauscht, über die auch zusätzlich Signalisierungsinformationen übertragen werden können. Zu den Signalisierungsinformationen zählen unter anderem Steuerinformationen vom Endgerät für das Nachrichtenvermittlungssystem oder für ein weiteres Endgerät. Darüber hinaus umfassen diese auch Informationen zur Vermittlung von Kanälen (B-Kanäle) für die Übertragung von leitungsvermittelten Daten.

Zur Auswertung der Signalisierungsdaten werden bei ISDN üblicherweise D-Kanal-Vermittlungseinheiten eingesetzt, die neben einer zum Ansteuern der Übertragungsstrecke notwendigen seriellen Anschlußlogik pro D-Kanal je eine Timing-, Switching-und Collision-Kontrollschaltung sowie eine Sende/Empfangseinheit aufweisen. Eine derartige Vermittlungseinheit ist beispielsweise als Baustein PEB 2075 im Siemens Data Book, ICs for Communication, Ausgabe 2/89, Seiten 332 bis 354 beschrieben. Diese bekannte D-Kanal-Vermittlungseinheit ist für vier D-Kanäle ausgelegt und in integrierter Schaltungstechnik realisiert. Die vier D-Kanäle werden dabei unabhängig voneinander verarbeitet. Die dazu erforderliche Verarbeitungseinrichtung muß daher auf dem Baustein in entsprechender - also vierfach - Ausfertigung vorgesehen werden. Damit sind allerdings der Anzahl der D-Kanäle bei diesem Baustein vor allem durch den erforderlichen hohen Schaltungsaufwand Grenzen gesetzt. Infolgedessen erhöht sich auch für die Vermittlungssysteme der schaltungstechnische Aufwand.

Aus der EP-A-0 320 890 ist ein Adapter für den Multiplex von ISDN-Terminals bekannt geworden. Im Gegensatz zum Gegenstand der Erfindung werden bei diesem System B-Kanäle des ISDN vermittelt.

Aufgabe der Erfindung ist es daher, eine digitale Vermittlungseinheit bzw. ein digitales Nachrichtenvermittlungssystem zur Verarbeitung von D-Kanälen mit geringem schaltungstechnischen Aufwand anzugeben.

Die vorstehend aufgezeigte Aufgabe wird bei einer gattungsgemäßen digitalen Nachrichtenvermittlungseinheit bzw. einem digitalem Nachrichtenvermittlungssystem durch die des Patentanspruches 1 bzw. durch die Merkmale des Patentanspruches 2 gelöst. Ausgestaltungen und Weiterbildungen der Erfindung sind Gegenstand von abhängigen Ansprüchen.

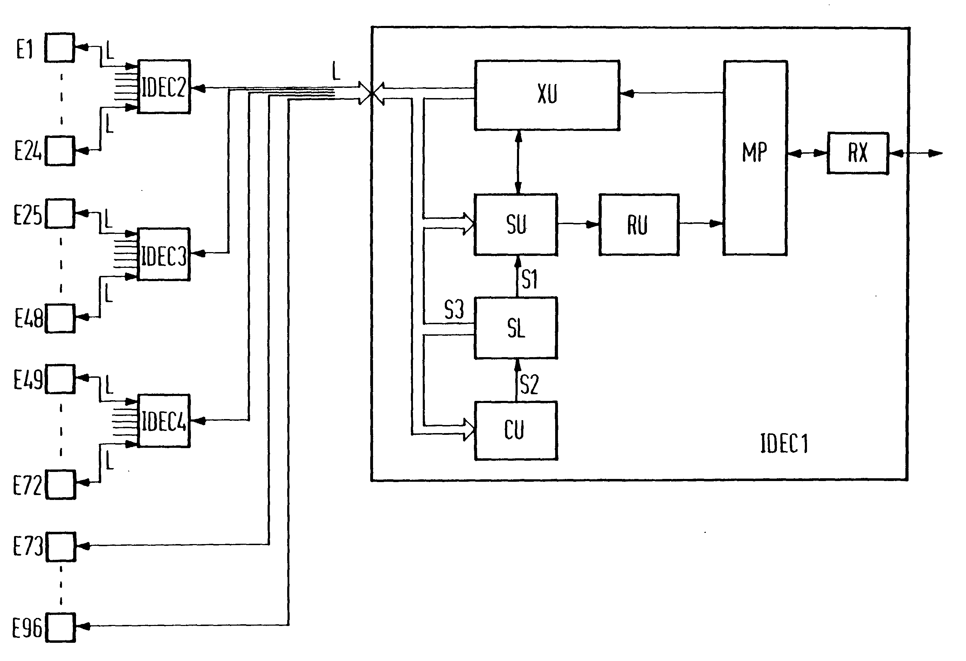

Die Erfindung wird nachfolgend anhand des in der einzigen Figur der Zeichnung dargestellten Ausführungsbeispiels näher erläutert.

Bei dem erfindungsgemäßen digitalen Nachrichtenvermittlungssystem des Ausführungsbeispiels sind vier digitale Nachrichtenvermittlungseinheiten IDEC1 bis IDEC4 vorgesehen. Die Nachrichtenvermittlungseinheiten IDEC1 bis IDEC4 sind identisch aufgebaut. Im folgenden wird daher lediglich die Nachrichtenvermittlungseinheit IDEC1 stellvertretend näher beschrieben. Diese ist über jeweils eine Übertragungsstrecke mit mehreren, in diesem Fall 24 untergeordneten Einheiten gekoppelt. Als untergeordnete Einheiten fungieren zum einen Endstellen E73 bis E96 und zum anderen weitere Nachrichtenvermittlungseinheiten IDEC2 bis IDEC4. An diese sind wiederum jeweils 24 Endstellen E1 bis E24 bzw. E25 bis E48 bzw. E49 bis E72 über jeweils eine Übertragungsstrecke angeschlossen. Die Übertragungsstrecken werden in der Zeichnung allgemein mit L bezeichnet, und umfassen neben den Übertragungsleitungen auch die erforderlichen Einrichtungen zur Leitungsanpassung, primäre Kodier- bzw. Dekodiereinrichtungen sowie Sende- und Empfangsverstärker.

Die Nachrichtenvermittlungseinheit IDEC1 enthält eine Empfangseinheit RU, die ihr zugeführte Signale auswertet und für eine weitere Verarbeitung, beispielsweise durch eine Mikroprozessoreinheit MP und einer mit dieser verbundenen Sende-/Empfangseinrichtung RX, aufbereitet. Der Empfangseinheit RU ist eine mit den Übertragungsstrecken L gekoppelte Schalteinheit SU, die abhängig von einem Steuersignal S1 eine der Übertragungsstrecken L mit der Empfangseinheit RU koppelt. Außerdem ist eine mit den Übertragungsstrecken L gekoppelte Überwachungseinheit CU vorgesehen, die das Auftreten von Sendesignalen der untergeordneten Einheiten IDEC2 bis IDEC4, E73 bis E96 auf den jeweiligen Übertragungsstrecken detektiert und entsprechende Informationssignale S2 abgibt. Diese werden einer mit der Über wachungseinheit CU, den Übertragungsstrecken L sowie der Schalteinheit SU gekoppelten Auswahleinheit SL zugeführt, die davon abhängig nach bestimmten Kriterien eine der Übertragungsstrecken L auswählt und die entsprechenden Steuersignale S1 für die Schalteinheit SU und Steuersignale S3 für die untergeordneten Einheiten IDEC2 bis IDEC4, E73 bis E96 erzeugt. Darüber hinaus enthält die Nachrichtenvermittlungseinheit IDEC1 auch eine Sendeeinrichtung XU, die zwischen die Übertragungsstrecken L und die Mikroprozessoreinheit MP geschaltet ist, die aber für die weiteren Betrachtungen nicht maßgeblich ist und daher nicht näher beschrieben wird. Nachdem eine der untergeordneten Einheiten IDEC2 bis IDEC4, E73 bis E76 von der Auswahleinheit SL ausgewählt wurde, werden durch entsprechende Steuersignale zum einen die nicht ausgewählten untergeordneten Einheiten für die Dauer des Sendebetriebs der ausgewählten untergeordneten Einheit gesperrt und zum anderen nach Abschluß des Sendebetriebs die ausgewählte untergeordnete Einheit für eine bestimmte Dauer gesperrt. Als Kriterium für die Auswahl einer untergeordneten Einheit dient beispielsweise die Reihenfolge der Aufnahme des Sendebetriebs bei den untergeordneten Einheiten IDEC2 bis IDEC4, E73 bis E96. Dabei beginnt jede der untergeordneten Einheiten IDEC2 bis IDEC4, E73 bis E96, sobald dies erforderlich ist, sofort mit dem Sendebetrieb. Ist bereits eine andere untergeordnete Einheit ausgewählt worden, da diese bereits vorher den Sendebetrieb aufgenommen hat, so wird der untergeordneten Einheit, die den Sendebetrieb später au fgenommen hat, ein entsprechendes Signal übertragen, worauf diese ihren Sendebetrieb einstellt und zu einem späteren Zeitpunkt wieder aufnimmt. Für den Fall, daß zwei oder mehrere untergeordnete Einheiten zur gleichen Zeit den Sendebetrieb aufnehmen, so wird nach einem in der Auswahleinheit SL abgelegten Prioritätsschema verfahren.

Mit einer erfindungsgemäßen digitalen Nachrichtenvermittlungseinheit ist es möglich, die Signalisierungskanäle - beispielsweise D-Kanäle - mehrerer Endgeräte - beispielsweise 24 - mit einer einzigen Empfangseinheit zu bedienen. Es werden hierbei beispielsweise Übertragungsprotokolle auf HDLC-Basis im Vollduplexbetrieb - beispielsweise LAP-D - verwendet. In Senderichtung ist die erforderliche Sequenzialisierung der Datenübertragung automatisch gegeben. Im Empfangsrichtung wird sie durch die Auswahleinheit SL und einen zusätzlichen Kontrollkanal garantiert. Die Auswahleinheit SL nutzt den Kontrollkanal, um den Endgeräten den Signalisierungskanal zuzuteilen bzw. zu entziehen. Dabei steht pro Endgerät ein Kontrollkanal zur Verfügung. Er wird unidirektional in einer Master-Multi-Slave-Konfiguration betrieben. Über ihn wird den Endgeräten (Slaves) von der Auswahleinheit (Master) mitgeteilt, ob sie auf ihren Signalisierungskanal senden dürfen. Der Kontrollkanal wird ebenso wie der Signalisierungskanal transparent über alle Schnittstellen hinweg durchgereicht. Gegebenenfalls kann durch Last-Look-Verfahren die Bitfehlerwahrscheinlichkeit auf dem Kontrollkanal reduziert werden. Eine Kontrolleinheit, wie beispielsweise der Mikroprozessor MP, kommuniziert mit dem Endgeräten IDEC2 bis IDEC4, E73 bis E96 über die zugehörigen Signalisierungskanäle. In Senderichtung kann Sendeport-Timeslot und Timeslotlänge frei programmiert werden. Damit kann dieser sequenziell beliebige Endgeräte ansprechen. In Empfangsrichtung wird ein externes Signal, das sogenannte Strobe-Signal, ausgewertet, das den Empfangsport/Timeslot selektiert. Dieses Strobe-Signal wird von der Auswahleinheit generiert.

Die Auswahleinheit SL teilt der Empfangseinheit RU jeweils ein Endgerät IDEC2 bis IDEC4, E73 bis E96 zu. Über den Kontrollkanal zeigt diese den Endgeräten IDEC2 bis IDEC4, E73 bis E96 an, ob die jeweiligen Signalisierungskanäle verfügbar oder blockiert sind. Nach der Systeminitialisierung sind alle Signalisierungskanäle gesperrt. Nachdem ein Teilnehmer beispielsweise eine Aktivierungsprozedur erfolgreich durchgeführt hat, wird er von der Auswahleinheit in eine Anforderungsliste aufgenommen. Zunächst wird allen Endgeräten, die in dieser Liste geführt werden, die Verfügbarkeit ihrer Signalisierungskanäle angezeigt. Sobald das erste Endgerät zu Senden beginnt, wird die Empfangseinheit RU mittels des Strobe-Signals auf das sendende Endgerät synchronisiert und die Signalisierungskanäle aller anderen Teilnehmer werden blockiert. Beginnen mehrere Teilnehmer gleichzeitig zu senden, so entscheidet die Auswahleinheit SL anhand eines Prioritätsschemas, wem der Signalisierungskanal zugeteilt bzw. entzogen wird. Dabei wird gleichzeitig sichergestellt, daß für den Fall mehrerer gleichzeitig sendender Endgeräte, jedes Endgerät einmal an die Reihe kommt, bevor ein Endgerät ein zweites Mal aktiviert wird. Die einzelnen Kanäle werden im Zeitmultiplexbetrieb übertragen.

Abschließend sei daraufhingewiesen, daß mehrere Einheiten, wie beispielsweise die Empfangseinheit RU, die Schalteinheit SU, die Auswahleinheit SL sowie der Mikroprozessor MP durch eine einzige Einheit, beispielsweise einen Signalprozessor, realisiert werden können. Auch ist es darüber hinaus möglich, den Signalisierungskanal und den Kontrollkanal zu einen einzigen Kanal zusammenfassen.

## Patentansprüche

1. Digitale Nachrichtenvermittlungseinheit, die mit mehreren untergeordneten Einheiten (IDEC2 bis IDEC4, E73 bis E96) über jeweils eine mehrere Datenkanäle umfassende, bidirektionale Übertragungsstrecke (L) koppelbar ist, zum Vermitteln mehrerer D-Kanäle in einem ISDN-Kommunikationssystem und zum Bündeln dieser Datenkanäle in Richtung einer anderen Einheit,
**gekennzeichnet durch**
eine einzige Verarbeitungseinrichtung (RU, SU, CU, SL) zur Bereitstellung eines Arbitriermechanismus zur Verarbeitung der Daten der Datenkanäle mit den folgenden Merkmalen:
(a) eine Empfangseinheit (RU) zum Auswerten der der Empfangseinheit (RU) zugeführten Signale, zum Aufbereiten für eine weitere Verarbeitung und zum Weiterleiten an die andere Einheit;
(b) eine Schalteinheit (SU), die der Empfangseinheit (RU) vorgeschaltet ist und mit den Übertragungsstrecken gekoppelt ist, zum Durchschalten einer der Übertragungsstrecken (L) zu der Empfangseinheit abhängig von einem Steuersignal;
(c) eine Überwachungseinheit (CU), die mit den Datenkanälen der Übertragungsstrecke (L) gekoppelt ist, zum Detektieren des Auftretens von Sendesignalen der untergeordneten Einheiten (IDEC2 bis IDEC4, E73 bis E96) auf den jeweiligen Übertragungsstrecken (L) und zum Abgeben entsprechender Informationssignale;
(d) eine Auswahleinheit (SL), die mit der Überwachungseinheit (CU), der Schalteinheit (SU) und den Übertragungsstrecken (L) gekoppelt ist, zum Auswählen einer der Übertragungsstrecken (L) nach bestimmten Kriterien abhängig von den Informationssignalen (32) der Überwachungseinheit (CU) und zum Erzeugen entsprechender Steuersignale (S1, S3) für die Schalteinheit (SU) und die untergeordneten Einheiten (IDEC2 bis IDEC4, E73 bis E96).

2. Digitales Nachrichtenvermittlungssystem zum Vermitteln und zum Bündeln mehrerer D-Kanäle in einem ISDN-Kommunikationssystem mit einer digitalen Nachrichtenvermittlungseinheit (IDEC1) und mit mehreren untergeordneten Einheiten (IDEC2 bis IDEC4), die jeweils über eine mehrere Datenkanäle umfassende, bidirektionale Übertragungsstrecke (L) mit der digitalen Nachrichtenvermittlungseinheit (IDEC1) gekoppelten sind,
**dadurch gekennzeichnet, daß**
die digitale Nachrichtenvermittlungseinheit (IDEC1) eine einzige Verarbeitungseinrichtung (RU, SU, CU, SL) zur Bereitstellung eines Arbitriermechanismus zur Verarbeitung der Daten der Datenkanäle mit den folgenden Merkmalen aufweist:
(a) eine Empfangseinheit (RU) zum Auswerten der der Empfangseinheit (RU) zugeführten Signale, zum Aufbereiten für eine weitere Verarbeitung und zum Weiterleiten an die andere Einheit;
(b) eine Schalteinheit (SU), die der Empfangseinheit (RU) vorgeschaltet ist und mit den Übertragungsstrecken gekoppelt ist, zum Durchschalten einer der Übertragungsstrecken (L) zu der Empfangseinheit abhängig von einem Steuersignal;
(c) eine Überwachungseinheit (CU), die mit den Datenkanälen der Übertragungsstrecke (L) gekoppelt ist, zum Detektieren des Auftretens von Sendesignalen der untergeordneten Einheiten (IDEC2 bis IDEC4, E73 bis E96) auf den jeweiligen Übertragungsstrecken (L) und zum Abgeben entsprechender Informationssignale;
(d) eine Auswahleinheit (SL), die mit der Überwachungseinheit (CU), der Schalteinheit (SU) und den Übertragungsstrecken (L) gekoppelt ist, zum Auswählen einer der Übertragungsstrecken (L) nach bestimmten Kriterien abhängig von den Informationssignalen (S2) der Überwachungseinheit (CU) und zum Erzeugen entsprechender Steuersignale (S1, S3) für die Schalteinheit (SU) und die untergeordneten Einheiten (IDEC2 bis IDEC4, E73 bis E96).

3. Digitales Nachrichtenvermittlungssystem nach Anspruch 2, **dadurch gekennzeichnet, daß** mindestens eine untergeordnete Einheit (IDEC2 bis IDEC4) durch eine weitere digitale Nachrichtenvermittlungseinheit gebildet wird.

4. Digitales Nachrichtenvermittlungssystem nach Anspruch 2 oder 3, **dadurch gekennzeichnet, daß** von der Auswahleinheit (SL) nicht ausgewählte untergeordnete Einheiten (IDEC2 bis IDEC4, E73 bis E96) aufgrund von der Auswahleinheit (SL) abgegebener Steuersignale (S3) den Sendebetrieb für eine bestimmte Dauer einstellen.

5. Digitales Nachrichtenvermittlunssystem nach einem der Ansprüche 2 bis 4,
**dadurch gekennzeichnet, daß** eine von der Auswahleinheit (SL) ausgewählte untergeordnete Einheit (IDEC2 bis IDEC4, E73 bis E96) durch ein entsprechendes Steuersignal (S3) für eine bestimmte Dauer nach Abschluß des Sendebetriebs gesperrt wird.

6. Digitales Nachrichtenvermittlungssystem nach einem der Ansprüche 2 bis 5,
**dadurch gekennzeichnet, daß** ein Kriterium für die Auswahl einer untergeordneten Einheit die Reihenfolge der Aufnahme des Sendebetriebs bei den untergeordneten Einheiten (IDEC2 bis IDEC4, E73 bis E96) ist.

7. Digitales Nachrichtenvermittlungssystem nach einem der Ansprüche 2 bis 6,
**dadurch gekennzeichnet, daß** mehrere Datenkanäle im Zeitmuliplexbetrieb zwischen den untergeordneten Einheiten (IDEC2 bis IDEC4, E73 bis E96) und der digitalen Nachrichtenvermittlungseinheit (IDEC1) übertragen werden.

8. Digitales Nachrichtenvermittlungssystem nach einem der Ansprüche 2 bis 7,
**dadurch gekennzeichnet, daß** der Empfängereinheit (RU) eine Datenverarbeitungseinheit (MP) nachgeschaltet ist.

## Claims

1. Digital message switching unit which can be coupled to a number of subordinate units (IDEC2 to IDEC4, E73 to E96) via in each case one bidirectional transmission link (L) comprising a number of data channels, for switching a number of D channels in an ISDN communication system and for multiplexing these data channels in the direction of another unit, **characterized by** a single processing device (RU, SU, CU, SL) for providing an arbitration mechanism for processing the data of the data channels, having the following features:
(a) a receiving unit (RU) for evaluating the signals supplied to the receiving unit (RU), for conditioning for further processing and for forwarding to the other unit;
(b) a switching unit (SU) which precedes the receiving unit (RU) and is coupled to the transmission links, for switching one of the transmission links (L) through to the receiving unit in dependence on a control signal;
(c) a control unit (CU) which is coupled to the data channels of the transmission link (L) for detecting the occurrence of transmit signals of the subordinate units (IDEC2 to IDEC4, E73 to E96) on the respective transmission links (L) and for delivering corresponding information signals;
(d) a selection unit (SL) which is coupled to the control unit (CU), the switching unit (SU) and the transmission links (L) for selecting one of the transmission links (L) in accordance with certain criteria depending on the information signals (S2) of the control unit (CU) and for generating corresponding control signals (S1, S3) for the switching unit (SU) and the subordinate units (IDEC2 to IDEC4, E73 to E96).

2. Digital message switching system for switching and for multiplexing a number of D channels in an ISDN communication system comprising a digital message switching unit (IDEC1) and a number of subordinate units (IDEC2 to IDEC4) which are in each case coupled to the digital message switching unit (IDEC1) via a bidirectional transmission link (L) comprising a number of data channels, **characterized in that** the digital message switching unit (IDEC1) has a single processing device (IU, SU, CU, SL) for providing an arbitration mechanism for processing the data of the data channels, having the following features:
(a) a receiving unit (RU) for evaluating the signals supplied to the receiving unit (RU), for conditioning for further processing and for forwarding to the other unit;
(b) a switching unit (SU) which precedes the receiving unit (RU) and is coupled to the transmission links, for switching one of the transmission links (L) through to the receiving unit in dependence on a control signal;
(c) a control unit (CU) which is coupled to the data channels of the transmission link (L) for detecting the occurrence of transmit signals of the subordinate units (IDEC2 to IDEC4, E73 to E96) on the respective transmission links (L) and for delivering corresponding information signals;
(d) a selection unit (SL) which is coupled to the control unit (CU), the switching unit (SU) and the transmission links (L) for selecting one of the transmission links (L) in accordance with certain criteria depending on the information signals (S2) of the control unit (CU) and for generating corresponding control signals (S1, S3) for the switching unit (SU) and the subordinate units (IDEC2 to IDEC4, E73 to E96).

3. Digital message switching system according to Claim 2, **characterized in that** at least one subordinate unit (IDEC2 to IDEC4) is formed by a further digital message switching unit.

4. Digital message switching system according to Claim 2 or 3, **characterized in that** subordinate units (IDEC2 to IDEC4, E73 to E96), which have not been selected by the selection unit (SL), stop the transmitting operation for a certain period because of control signals (S3) delivered by the selection unit (SL).

5. Digital message switching system according to one of Claims 2 to 4, **characterized in that** a subordinate unit (IDEC2 to IDEC4, E73 to E96), which is selected by the selection unit (SL), is blocked by a corresponding control signal (S3) for a certain period after conclusion of the transmitting operation.

6. Digital message switching system according to one of Claims 2 to 5, **characterized in that** the order in which the transmitting operation is started at the subordinate units (IDEC2 to IDEC4, E73 to E96) is a criterion for selecting a subordinate unit.

7. Digital message switching system according to one of Claims 2 to 6, **characterized in that** a number of data channels are transmitted in time-division multiplex mode between the subordinate units (IDEC2 to IDEC4, E73 to E96) and the digital message switching unit (IDEC1).

8. Digital message switching system according to one of Claims 2 to 7, **characterized in that** the receiving unit (RU) is followed by a data processing unit (MP).

## Revendications

1. Unité numérique de commutation de messages, qui peut être couplée à plusieurs unités (IDEC2 à IDEC4, E73 à E96) subordonnées par l'intermédiaire respectivement d'une voie (L) de transmission bidirectionnelle, comportant plusieurs voies de données, pour la commutation de plusieurs voies D dans un système de communication RNIS et pour regrouper ces voies de données en direction d'une autre unité,
**caractérisée par**
un seul dispositif (RU, SU, CU, SL) de traitement pour la préparation d'un mécanisme d'arbitrage pour le traitement des données des voies de données, comportant les dispositions suivantes :
(a) une unité (RU) de réception pour l'exploitation des signaux envoyés à l'unité (RU) de réception, pour la préparation en vue d'un traitement et pour l'envoi à l'autre unité ;
(b) une unité (SU) de commutation, qui est montée en amont de l'unité (RU) de réception et qui est couplée aux voies de transmission, pour l'interconnexion de l'une des voies (L) de transmission à l'unité de réception en fonction d'un signal de commande ;
(c) une unité (CU) de surveillance, qui est couplée aux voies de données de la voie (L) de transmission, pour la détection de l'apparition de signaux d'émission des unités (IDEC2 à IDEC4, E73 à E96) sur les voies (L) de transmission associées et pour la fourniture de signaux d'informations correspondants ;
(d) une unité (SL) de sélection, qui est couplée à l'unité (CU) de surveillance, à l'unité (SU) de commutation et aux voies (L) de transmission, pour la sélection de l'une des voies (L) de transmission suivant des critères déterminés, en fonction des signaux (S2) d'informations de l'unité (CU) de surveillance, et pour produire des signaux (S1, S3) de commande correspondants pour l'unité (SU) de commutation et les unités (IDEC2 à IDEC4, E73 à E96) subordonnées.

2. Système numérique de commutation de messages pour la commutation et le regroupement de plusieurs voies D dans un système de communication RNIS, comportant une unité (IDEC1) numérique de commutation de messages et comportant plusieurs unités (IDEC2 à IDEC4) qui sont couplées respectivement par l'intermédiaire d'une section (L) de transmission bidirectionnelle, comportant plusieurs voies de données, à l'unité (IDEC1) numérique de commutation de messages,
**caractérisé en ce que**
l'unité (IDEC1) numérique de commutation de messages comporte un seul dispositif (RU, SU, CU, SL) de traitement pour la préparation d'un mécanisme d'arbitrage pour le traitement des données des voies de données, comportant les dispositions suivantes :
(a) une unité (RU) de réception pour l'exploitation des signaux envoyés à l'unité (RU) de réception, pour la préparation en vue d'un traitement ultérieur et pour l'envoi à l'autre unité ;
(b) une unité (SU) de commutation, qui est montée en amont de l'unité (RU) de réception et qui est couplée aux voies de transmission, pour l'interconnexion de l'une des voies (L) de transmission avec l'unité de réception en fonction d'un signal de commande ;
(c) une unité (CU) de surveillance, qui est couplée aux voies de données de la voie (L) de transmission, pour la détection de l'apparition de signaux d'émission des unités (IDEC2 à IDEC4, E73 à E96) subordonnées sur les voies (L) de transmission associées et pour la fourniture de signaux d'informations correspondants ;
(d) une unité (SL) de sélection qui est couplée à l'unité (CU) de surveillance, à l'unité (SU) de commutation et aux voies (L) de transmission, pour la sélection de l'une des voies (L) de transmission suivant des critères déterminés, en fonction des signaux (S2) d'informations de l'unité (CU) de surveillance, et pour produire des signaux (S1, S3) de commande correspondants pour l'unité (SU) de commutation et les unités (IDEC2 à IDEC4, E73 à E96) subordonnées.

3. Système numérique de commutation de messages suivant la revendication 2, **caractérisé en ce qu'**au moins une unité (IDEC2 à IDEC2) subordonnées est formée par une unité numérique supplémentaire de commutation de messages.

4. Système numérique de commutation de messages suivant la revendication 2 ou 3, **caractérisé en ce que** des unités (IDEC2 à IDEC4, E73 à E96) subordonnées, non sélectionnée par l'unité (SL) de sélection, arrêtent pour une durée déterminée le fonctionnement d'émission sur la base de signaux (S3) de commande fournis par l'unité (SL) de sélection.

5. Système numérique de commutation de messages suivant l'une des revendications 2 à 4, **caractérisé en ce qu'**une unité (IDEC2 à IDEC4, E73 à E96) subordonnée, sélectionnée par l'unité (SL) de sélection est bloquée par un signal (S3) de commande correspondant pour une durée déterminée après achèvement du fonctionnement d'émission.

6. Système numérique de commutation de messages suivant l'une des revendications 2 à 5, **caractérisé en ce qu'**un critère pour la sélection d'une unité subordonnée est la succession de la réception du fonctionnement d'émission pour les unités (IDEC2 à IDEC4, E73 à E96) subordonnées.

7. Système numérique de commutation de messages suivant l'une des revendications 2 à 6, **caractérisé en ce qu'**il est transmis plusieurs voies de données dans le fonctionnement en multiplexage dans le temps entre les unités (IDEC2 à IDEC4, E73 à E96) subordonnées et l'unité (IDEC1) numérique de commutation de messages.

8. Système numérique de commutation de messages suivant l'une des revendications 2 à 7, **caractérisé en ce qu'**une unité (MP) de traitement de données est montée en aval de l'unité (RU) de réception.
